# EUROPEAN PATENT APPLICATION

(11) **EP 4 775 914 A1**
(43) Date of publication of application: **15.07.2026**
(21) Application number: 25150642.4
(22) Date of filing: 08.01.2025
(51) Int. Cl.: F28D 9/00, B60H 1/00, B60H 1/32, F28F 9/26, F28F 9/00

(54) **A HEAT EXCHANGER ASSEMBLY**

(71) Applicant: Valeo Electrification, 95892 Cergy Pontoise (FR)
(72) Inventor: BELZOWSKI, Michal, 32 050 Skawina (PL); DENOUAL, Christophe, 78322 Le Mesnil-Saint-Denis Cedex (FR); TISSOT, Julien, 78322 Le Mesnil-Saint-Denis Cedex (FR); STRAMECKI, Tomasz, 32 050 Skawina (PL); AZZOUZ, Kamel, 78322 Le Mesnil-Saint-Denis Cedex (FR)
(74) Representative: Valeo Powertrain Systems

(57) **Abstract**

The object of the invention is, among others, a heat exchanger assembly (1), comprising
-a first heat exchanger (10),
-at least one second heat exchanger (20),
-at least one intermediate member (50) arranged between the first heat exchanger (10) and the second heat exchanger (20),

wherein said intermediate component (50) further comprises
a first face (50A) having a fixation surface for fixation to the first heat exchanger (10), a second face (50B), opposite to the first face (50A), and having a fixation surface for fixation to the second heat exchanger (20),
at least one channel (55) extending between the first face (50A) and the second face (50B), wherein the channel (55) is configured to provide a fluidal communication between the first heat exchanger (10) and the second heat exchanger (20), wherein the intermediate component (50) further comprises at least one thermal insulating zone (59) delimited at least by the first face (50A) and the second face (50B).

## Description

### FIELD OF THE INVENTION

The invention relates to a heat exchanger assembly. In particular, the invention relates to heat exchanger assembly for a motor vehicle.

### BACKGROUND OF THE INVENTION

Increased popularity of electric vehicles (EV) causes gradual increase of demands in terms of power and efficiency of air conditioning / heat pump loops in the vehicle. Major part of applications struggle to find a proposal which is well balanced in terms of packaging, performance and cost. The size of the heat exchangers cannot be increased in order to meet the targets, due to limited space in the electric vehicle. It is therefore preferred to provide a compact assembly to meet all customer requirements.

One of the drawbacks of providing the heat exchanger assembly is the temperature difference which may occur between, for example, the heat exchangers of the assembly. This increases the risk of malfunction, reduced efficiency, or even thermal stress which may lead to leakage of the assembly.

Thus, there is a need to provide a heat exchanger assembly which would reduce the heat transfer between the sub-components forming this heat exchanger assembly.

There is also a need to increase the heat exchanger efficiency without negative impact on packaging.

There is also a need to provide an inexpensive heat exchanger assembly.

### SUMMARY OF THE INVENTION

The object of the invention is, among others, a heat exchanger assembly, comprising a first heat exchanger, at least one second heat exchanger, at least one intermediate member arranged between the first heat exchanger and the second heat exchanger, wherein said intermediate component further comprises a first face having a fixation surface for fixation to the first heat exchanger, a second face, opposite to the first face, and having a fixation surface for fixation to the second heat exchanger, at least one channel extending between the first face and the second face, wherein the channel is configured to provide a fluidal communication between the first heat exchanger and the second heat exchanger, wherein the intermediate component further comprises at least one thermal insulating zone delimited at least by the first face and the second fac.

Advantageously, the thermal insulating zone comprises an air spacer, the air spacer being configured to provide a non-null distance at least between the first heat exchanger and the second heat exchanger.

Advantageously, the thermal insulating zone further comprises an air spacer to form a confined air space.

Advantageously, the thermal insulating zone further comprises an peripheral wall surrounding the air spacer to form a confined air space.

Advantageously, the thermal insulating zone further comprises a first insulating wall arranged between the air spacer and the first face and a second insulating wall arranged between the air spacer and the second face.

Advantageously, the first insulating wall and the second insulating wall are connected by the peripheral wall to form the confined air space.

Advantageously, the intermediate component is a block, wherein the block comprises at least one through hole having open ends on the first face and the second face accordingly, wherein the through hole is forming the thermal insulating zone. Advantageously, the intermediate component is a plate assembly, the plate assembly comprising a first plate carrying the first face, and a second plate carrying the second face, wherein the thermal insulating zone is formed at least between the first plate and the second plate.

Advantageously, the intermediate component comprises at least one first orifice arranged on the first face, and at least one second orifice located on the second face, so that the channel extends between the first orifice and the second orifice.

Advantageously, the channel is extruded in the intermediate component.

Advantageously, the first orifice is arranged on the first plate, the second orifice is arranged on the second plate, and wherein the channel extends between the first plate and the second plate.

Advantageously, the plate assembly further comprises at least one plate connector fixed between the first plate and the second plate, wherein the first orifice and the second orifice are fluidly connected by said plate connector.

Advantageously, the first heat exchanger comprises a plurality of plates, each of the plates comprising a general plate of extension, wherein the plates are stacked together in a stacking direction being perpendicular to the general plane of extension, wherein the plates are configured to provide passages for a first fluid, and second passages for a second fluid, wherein the first heat exchanger further comprises a first fluid inlet manifold and a first fluid outlet manifold, wherein the first manifolds are formed in the plates, wherein the first fluid manifolds are configured to provide a fluidal communication between the first passages, and wherein the first heat exchanger further comprises a second fluid inlet manifold and a second fluid outlet manifold, wherein the second manifolds are formed in the plates, wherein the second fluid manifolds are configured to provide a fluidal communication between the second passages.

Advantageously, the second heat exchanger comprises a plurality of plates, each of the plates comprising a general plate of extension, wherein the plates are stacked together in a stacking direction being perpendicular to the general plane of extension, wherein the plates are configured to provide passages for a first fluid, and third passages for a third fluid, wherein the second heat exchanger further comprises a first fluid inlet manifold and a first fluid outlet manifold, wherein the second manifolds are formed in the plates, wherein the first fluid manifolds are configured to provide a fluidal communication between the first passages, and wherein the second heat exchanger further comprises a third fluid inlet manifold and a third fluid outlet manifold, wherein the third manifolds are formed in the plates, wherein the third fluid manifolds are configured to provide a fluidal communication between the third passages.

Advantageously, the first fluid outlet manifold of the first heat exchanger is fluidly connected with the first fluid inlet manifold of the second heat exchanger via the intermediate component, so that the intermediate component is arranged downstream the first heat exchanger and the second heat exchanger is arranged downstream the intermediate component.

Advantageously, the first heat exchanger is a chiller and the second heat exchanger (20) is an internal heat exchanger.

### BRIEF DESCRITPTION OF DRAWINGS

Examples of the invention will be apparent from and described in detail with reference to the accompanying drawings, in which:

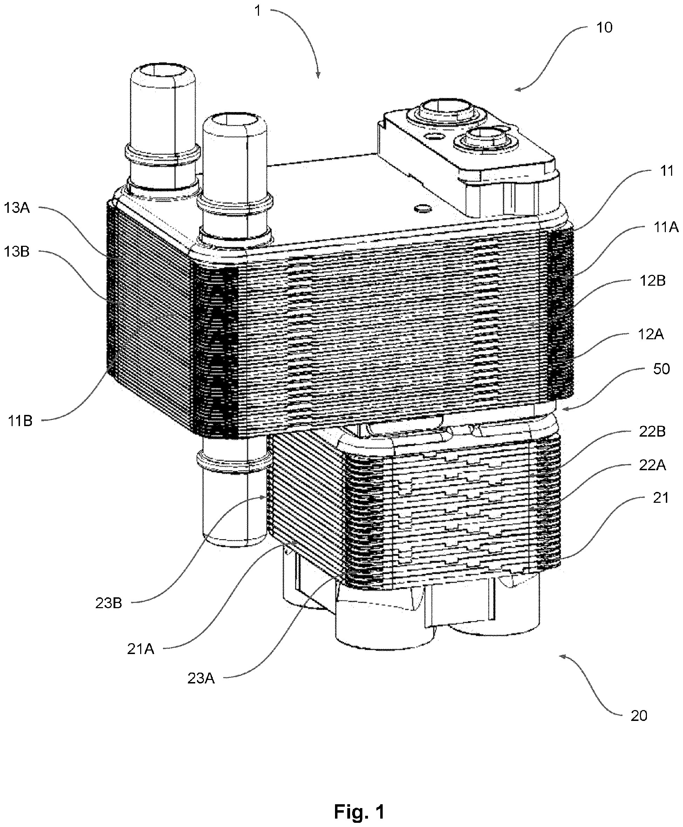

Fig.1 shows a perspective view of the heat exchanger assembly with intermediate component.

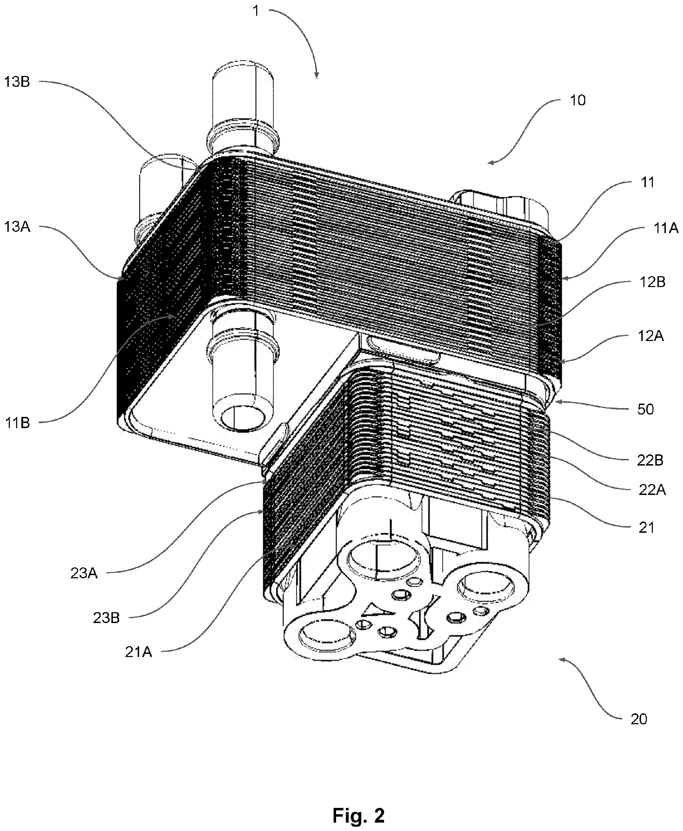

Fig. 2 shows another perspective view of the heat exchanger assembly with intermediate component.

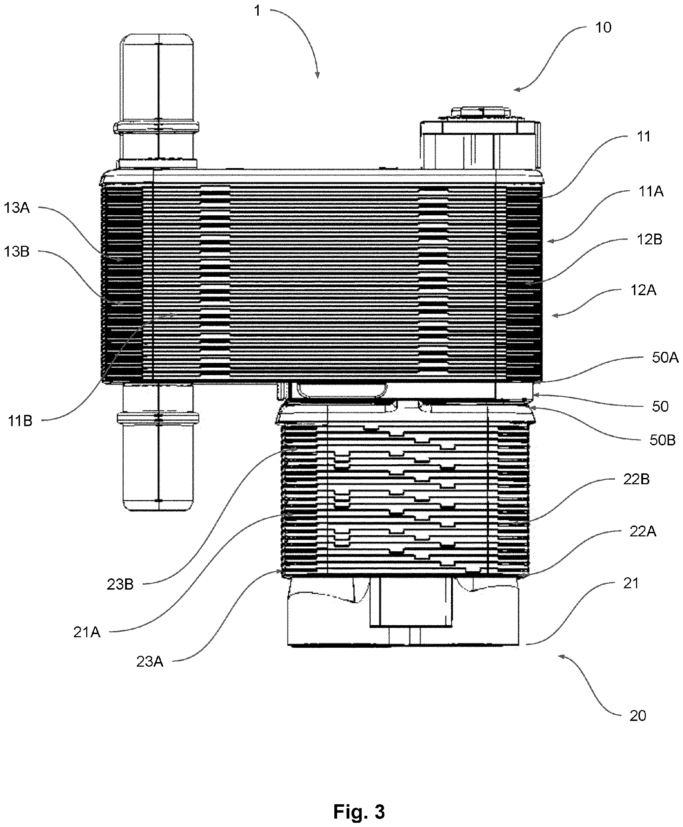

Fig. 3 shows a side view of the heat exchanger assembly with intermediate component.

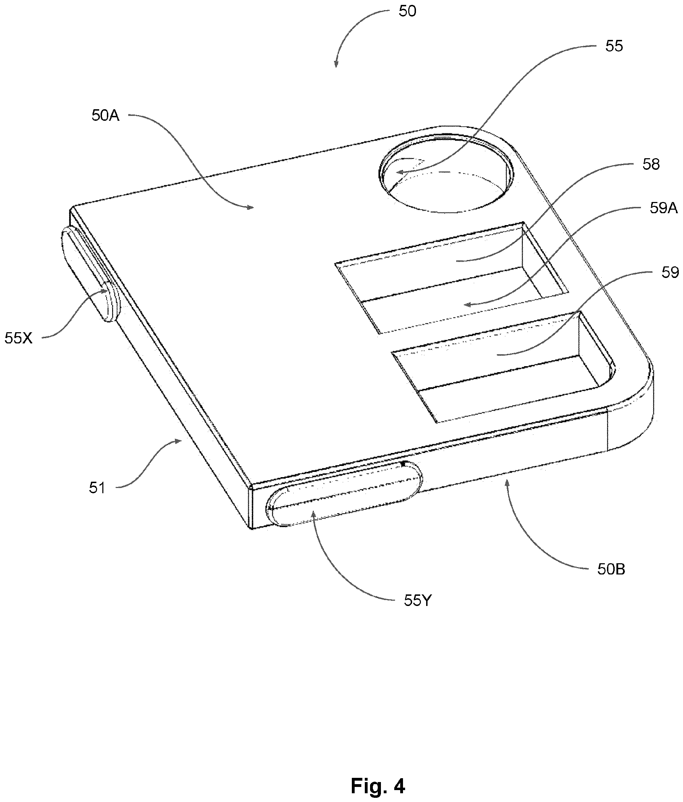

Fig. 4 shows a perspective view of the intermediate component with an insulating zone.

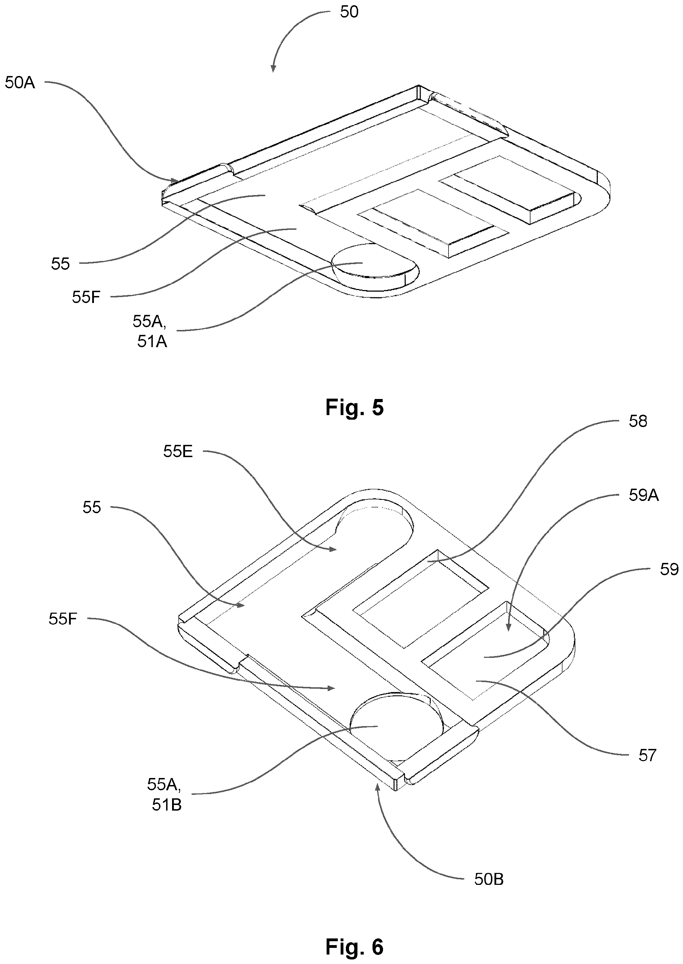

Fig. 5 shows a perspective view of the cross section through one part of the intermediate component being a block.
Fig. 6 shows a perspective view of the cross section through the other part of the intermediate component being a block.

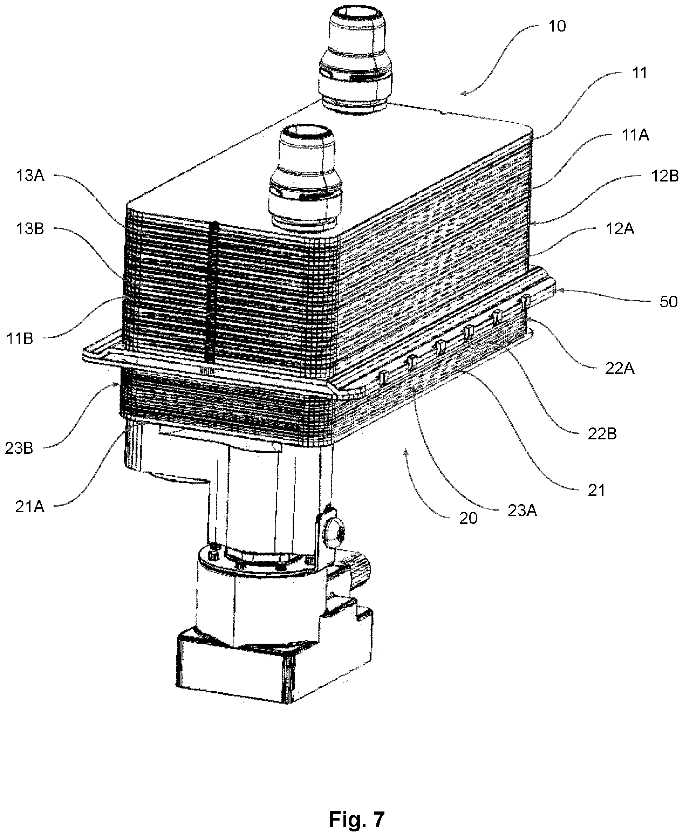

Fig. 7 shows a perspective view of the heat exchanger assembly with the intermediate component being a plate assembly.

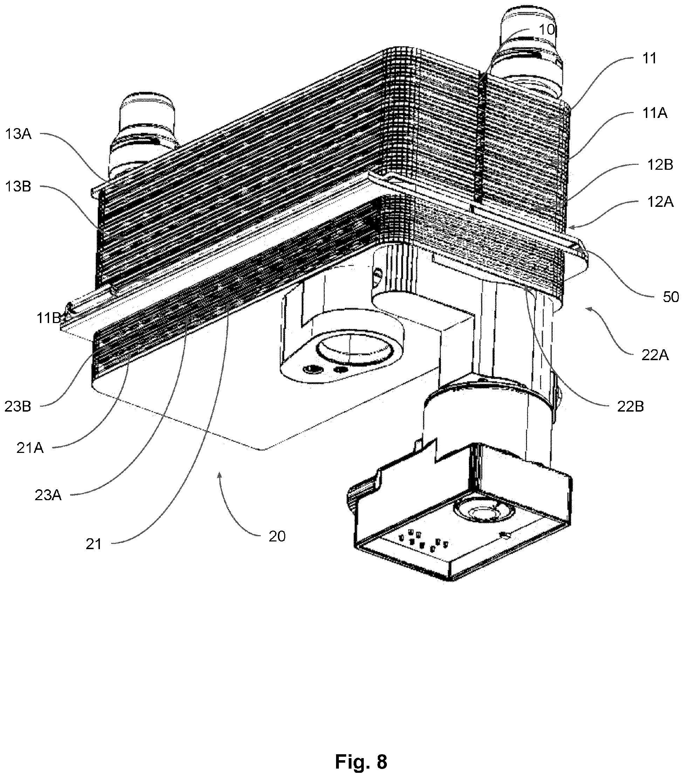

Fig. 8 shows another perspective view of the heat exchanger assembly with the intermediate component being a plate assembly.

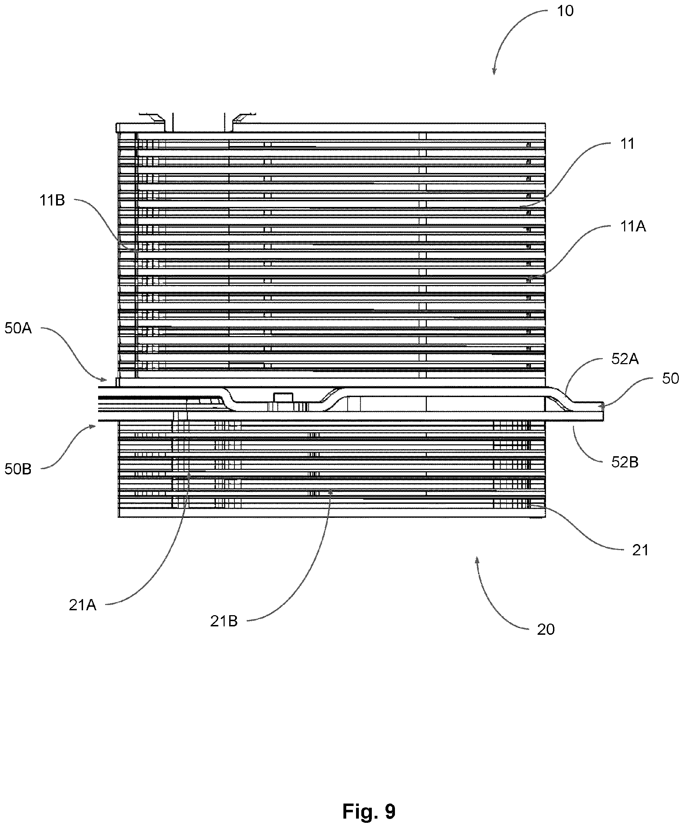

Fig. 9 shows a cross section view of the heat exchanger assembly having plate assembly as intermediate component.

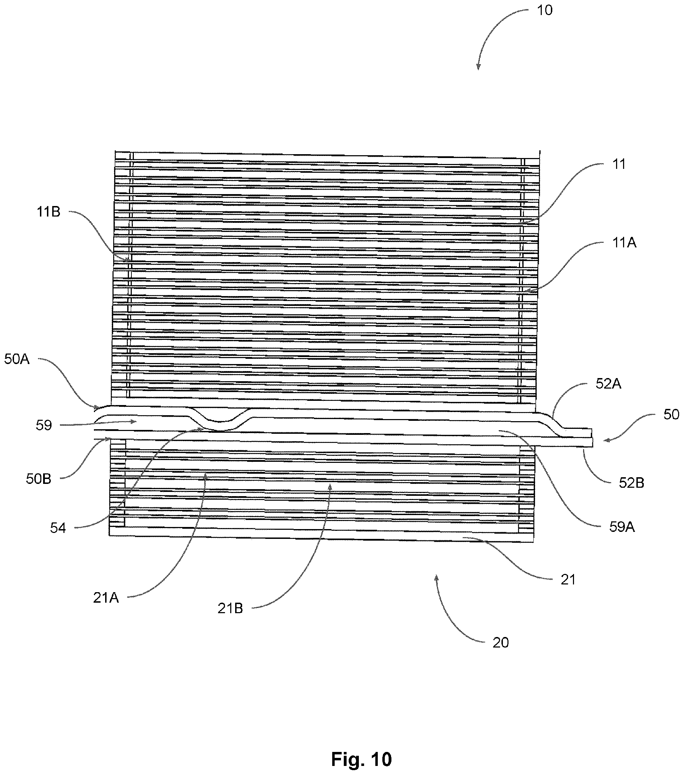

Fig. 10 shows another cross section view of the heat exchanger assembly having plate assembly as intermediate component, where the distance between plates is provides by a bump.

### DETAILED DESCRIPTION OF THE INVENTION

The subject- matter of the invention relates to a heat exchanger assembly 1 (herewith: assembly). The term assembly may be regarded as the composition of at least two heat exchanges fixed in a detachable or undetachable manner. The assembly 1 may comprise additional sub-components.

Accordingly, the assembly 1 may comprise a first heat exchanger 10 and at least one second heat exchanger 20 without limitation to type or function. For the sake of conciseness, the present invention is described on basis of selected types of the heat exchangers 10, 20.

Accordingly, the first heat exchanger 10 may be a chiller. The chiller exchanges the heat between, for example a refrigerant and coolant.

The first heat exchanger 10 may comprise a plurality of plates 11. The plates may be formed in the process of stamping. Each of the plates 11 is a substantially planar element comprising a general plate of extension. This allows the plates 11 to be stacked together in a stacking direction. The first stacking direction may be perpendicular to the general plane of extension. When stacked together, the plates 11 are configured to provide passages 11A for a first fluid, and second passages 11B for a second fluid. The first fluid may be low pressure refrigerant LP, whereas the second fluid may be a coolant.

In order to distribute the first fluid and the second fluid across the first heat exchanger 10, the first heat exchanger 10 may further comprise a first fluid inlet manifold 12A and a first fluid outlet manifold 12B. The first fluid manifolds 12A, 12B are formed in the plates 11. For example, each plate 11 may comprise openings that form a channel, i.e. a manifolds, 11A. 11B, wherein the manifolds 11A, 11B, may extend in parallel to the stacking direction.

The first fluid manifolds 12A, 12B are configured to provide a fluidal communication between the first passages 11A.

Further, the first heat exchanger 10 may further comprise a second fluid inlet manifold 13A and a second fluid outlet manifold 13B which allow second fluid distribution across the first heat exchanger 10. The second manifolds 13A, 13B are formed in the plates 11. For example, each plate 11 may comprise openings that form a channel, i.e. a manifolds 13A 13B, wherein the manifolds 13A, 13B, may extend in parallel to the stacking direction.

The second fluid manifolds 13A, 13B are configured to provide a fluidal communication between the second passages 11B.

The second heat exchanger 20 may, for example, an internal heat exchanger IHX. The second heat exchanger 20 may comprise a plurality of plates 21. The plates 21 of the second heat exchanger 10 may have different structure than the plates 11 of the first heat exchanger 10, yet these adaptations are known in the art and the plates 11 21 are referred altogether to simplify the description.

Each of the plates 21 is a substantially planar element comprising a general plate of extension. This allows the plates 21 to be stacked together in a stacking direction. For instance, the stacking directions for both heat exchanger 10, 20 may be parallel, yet different stacking directions are also envisaged.

The stacking direction may be perpendicular to the general plane of extension of the plates 21. When stacked together, the plates 21 are configured to provide passages 21A for a first fluid, and third passages 21B for a third fluid. The first fluid may be, for example a low pressure refrigerant LP, whereas the third fluid, may be a high pressure fluid HP. The term high pressure fluid refers to the fluid having greater pressure than the first fluid.

It should be noted that the first fluid circulating in the passages 21A of the second heat exchanger 20 may be the same fluid as circulating in the passages 11A of the first heat exchanger 10.

Accordingly, the second heat exchanger 20 may further comprises a first fluid inlet manifold 22A and a first fluid outlet manifold 22B. The second manifolds 22A, 22B are formed in the plates 21. For example, each plate 21 may comprise openings that form a channel, i.e. a manifolds, 22A. 22B, wherein the manifolds 22A, 22B, may extend in parallel to the stacking direction.

The first fluid manifolds 22A, 22B are configured to provide a fluidal communication between the first passages 21A.

The second heat exchanger 20 may further comprise a third fluid inlet manifold 23A and a third fluid outlet manifold 23B. The third manifolds 23A, 23B may be formed in the plates 11.

For example, each plate 21 may comprise openings that form a channel, i.e. a manifolds, 23A. 23B, wherein the manifolds 23A, 23B, may extend in parallel to the stacking direction.

The third fluid manifolds 23A, 23B are configured to provide a fluidal communication between the third passages 21B.

The assembly 1 provides a short path for at least the first fluid what improves the efficiency of both heat exchangers 10, 20 by, for example, reducing pressure losses. In order to achieve this, the first fluid outlet manifold 12B of the first heat exchanger 10 may be fluidly connected with the first fluid inlet manifold 22A of the second heat exchanger 20 via an intermediate component 50. It is preferred that the intermediate component 50 is arranged downstream the first heat exchanger 10 and the second heat exchanger 20 is arranged downstream the intermediate component 50.

The features of intermediate member 50 are described in further paragraphs.

At least one intermediate member 50 may arranged between the first heat exchanger 10 and the second heat exchanger 20. In other words, the heat exchanger assembly 1 may comprise only one intermediate member 50, or two or even three intermediate members 50.

Accordingly, the intermediate component 50 a height, width and thickness. When assembled, the thickness may be measured in a direction which is parallel to the stacking direction of any of the exchangers 10, 20. The height and width may be measured in perpendicular to the stacking direction of any of the exchangers 10, 20, whereas the width is measured in a direction normal to the height.

The intermediate component 50 may further comprise a first face 50A having a fixation surface for fixation to the first heat exchanger 10. In other words, the first face 50A may be located on the surface of the intermediate component 50 which is intended to engage with the first heat exchanger 10.

The intermediate component 50 may further comprise a second face 50B. The second face 50B is opposite to the first face 50A. The second face 50B may further comprise a fixation surface for fixation to the second heat exchanger 20. In other words, the second face 50B may be located on the surface of the intermediate component 50 which is intended to engage with the second heat exchanger 20. It should be noted that the first face 50A fixed to the second heat exchanger 20 and second face 50B fixed to the first heat exchanger are also envisaged.

The intermediate component 50 may further comprise at least one channel 55 extending between the first face 50A and the second face 50B. The channel 55 is configured to provide a fluidal communication between the first heat exchanger 10 and the second heat exchanger 20. The shape of the cross section of the channel 55 may have different shape and sizes. For example, the channel 55 may have a shape of the circle, oblong or substantially rectangular, depending on the application.

As the heat exchangers 10, 20 may be adapted for the circulation of different fluids, they may be subject to difference of temperature between them. Thus, the intermediate component 50 further comprises at least one thermal insulating zone 59. The thermal insulating zone 59 allows decrease the temperature difference between the heat exchangers 10, 20, This further allows increase resistance of the assembly to thermal shock and allows to increase the overall performance of the heat exchangers 10, 20. The thermal insulating zone 59 may be delimited at least by the first face 50A and the second face 50B. In other words, the insulating zone 59, is located within the perimeter of the intermediate component 50. It should be noted that the insulating zone 59 does not obstruct or interfere with the channel 55. This means that both functions, i.e. thermal insulation of the heat exchangers 10, 20, and the fluidal communication of these heat exchangers 10, 20 may be provided.

The thermal insulating zone 59 may comprise an air spacer 59A. The air spacer 59A allows providing inexpensive and effective thermal insulation 59. The air spacer 59A may be carried out by providing a non-null distance at least between the first heat exchanger 10 and the second heat exchanger 20. This means that any air spacer 59A which borders with the heat exchangers 10, 20 and/ or with the portions of the intermediate component 50, may be regarded as insulating zone 59.

The thermal insulating zone 59 comprising the air spacer 59A may be configured to form a confined air space. The confined air space may be provided either by the intermediate component 50 itself, or by portions of other components, such as the first heat exchanger 10, and/or the second heat exchanger 20.

In one of the examples, the thermal insulating zone 59 may further comprise a peripheral wall 58 surrounding the air spacer 59A to form a confined air space. The peripheral wall may be a part of the intermediate component 50. The peripheral wall 58 may extend in a width direction of the intermediate component 50 to form a closed profile of the insulating zone 59.

In one of the examples, the thermal insulating zone 59 may be entirely encapsulated by the body of the intermediate component 50. To achieve this, the thermal insulating zone 59 may further comprise a first insulating wall 56 arranged between the air spacer 59A and the first face 50A and a second insulating wall 57 arranged between the air spacer 59A and the second face 50B. In other words, the insulating walls 56, 57 may form a surface of the first face 50A and the second face 50B, accordingly.

Accordingly, the first insulating wall 56 and the second insulating wall 57 may be connected by the peripheral wall 58 to form the confined air space.

In one of the examples the intermediate component 50 is a block 51. The block 51 may be a unitary pierce of metallic material, such as aluminum which can be easily cut to shape or extruded. The block 51 may comprise at least one through hole 51A having open ends on the first face 50A and the second face 50B accordingly, wherein the through hole 51A is forming the thermal insulating zone 59.

In another example, the intermediate component 50 may be in form of a plate assembly 52. The plate assembly 52 is to be understood as at least two plates. The plates may be joined together, yet it is preferred to provide relatively small contact surface between said plates in order to provide spacing between the plates, so that the plate assembly 52 may comprise an insulating zone 59. Accordingly, the plate assembly 52 may comprise a first plate 52A carrying the first face 50A, and a second plate 52B carrying the second face 50B. The thermal insulating zone 59 may be formed at least between the first plate 52A and the second plate 52B. In order to provide a distance between the plates, at least one of the plates may comprise bumps 54 provided on at least one of the first plate 52A or the second plate 52B. Alternatively, at least one projection can be provided on at least one of the first plate 52A or the second plate 52B. The projection (not shown) can be a free end shaped out of the first plate 52A or the second plate 52B. In case the bump 54 and/or projection is located on the first plate 52A, it extends towards the second plate 52B and vice-versa. The bums or projections may be arranged in an orderly manner, meanings they exhibit orderly pattern, or they can be arranged in loose formation, meaning they are arranged in a random manner.

In order to provide the fluidal communication between the heat exchangers 10, 20, the intermediate component 59 may at least one first orifice 55A arranged on the first face 50A, and at least one second orifice 55B located on the second face 50B, so that the channel 55 extends between the first orifice 55A and the second orifice 55B. The channel 55 may be extruded in case the intermediate component 50 is a block 51. The channel 55 extruded in the block 51 may be of different shapes and sizes. For example, the channel 55 may comprise a first leg 55E and a second leg 55F which are arranged substantially in perpendicular to each other to form L-shaped channel 55. As there will be two different directions of extrusion, the additional orifices may be required in the block 51 which may further comprise plugs 55X, 55Y.

In case the intermediate component 50 is plate assembly 52, the channel 55 may be formed between the first plate 52A and the second plate 52B.

In this example, the first orifice 55A is arranged on the first plate 52A, and the second orifice 55B is arranged on the second plate 52B. The channel 55 extends between the first plate 52A and the second plate 52B. In simplest example, the channel 55 is formed as a bump 54 on the first plate 52A so that the bump 54 extends beyond the general plane of the first plate 55A. In case the channel 55 is formed as a bump 54 on the second plate 52B, the bump 54 extends beyond the general plane of the second plate 55B.

The plate assembly 52 may further comprise at least one plate connector 52C fixed between the first plate 52A and the second plate 52B. The connector 52C may be an additional component sandwiched between the first plate 52A and the second plate 52B, so that the first orifice 55A and the second orifice 55B are fluidly connected by said plate connector 52C.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A heat exchanger assembly (1), comprising
- a first heat exchanger (10),
- at least one second heat exchanger (20),
- at least one intermediate member (50) arranged between the first heat exchanger (10) and the second heat exchanger (20),
wherein said intermediate component (50) further comprises
a first face (50A) having a fixation surface for fixation to the first heat exchanger (10), a second face (50B), opposite to the first face (50A), and having a fixation surface for fixation to the second heat exchanger (20),
at least one channel (55) extending between the first face (50A) and the second face (50B), wherein the channel (55) is configured to provide a fluidal communication between the first heat exchanger (10) and the second heat exchanger (20), wherein the intermediate component (50) further comprises at least one thermal insulating zone (59) delimited at least by the first face (50A) and the second face (50B).

2. The heat exchanger assembly (1) according to claim 1, wherein the thermal insulating zone (59) comprises an air spacer (59A), the air spacer (59A) being configured to provide a non-null distance at least between the first heat exchanger (10) and the second heat exchanger (20).

3. The heat exchanger assembly (1) according to claim 2, wherein the thermal insulating zone (59) further comprises an air spacer (59A) to form a confined air space.

4. The heat exchanger assembly (1) according to any of claims 2 or 3, wherein the thermal insulating zone (59) further comprises a first insulating wall (56) arranged between the air spacer (59A) and the first face (50A) and a second insulating wall (57) arranged between the air spacer (59A) and the second face (50B).

5. The heat exchanger assembly (1) according to claims 3 and 4, wherein the first insulating wall (56) and the second insulating wall (57) are connected by the peripheral wall (58) to form the confined air space.

6. The heat exchanger assembly (1) according to any of the preceding claims, wherein the intermediate component (50) is a block (51), wherein the block (51) comprises at least one through hole (51A) having open ends on the first face (50A) and the second face (50B) accordingly, wherein the through hole (51A) is forming the thermal insulating zone (59).

7. The heat exchanger assembly (1) according to any of claims 1-5, wherein the intermediate component (50) is a plate assembly (52), the plate assembly (52) comprising a first plate (52A) carrying the first face (50A), and a second plate (52B) carrying the second face (50B), wherein the thermal insulating zone (59) is formed at least between the first plate (52A) and the second plate (52B).

8. The heat exchanger assembly (1) according to any of the preceding claims, wherein the intermediate component (59) comprises at least one first orifice (55A) arranged on the first face (50A), and at least one second orifice (55B) located on the second face (50B), so that the channel (55) extends between the first orifice (55A) and the second orifice (55B).

9. The heat exchanger assembly (1) according to claims 1 or 6, wherein the channel (55) is extruded in the intermediate component (50).

10. The heat exchanger assembly (1) according to claims 7 and 8, wherein the first orifice (55A) is arranged on the first plate (52A), the second orifice (55B) is arranged on the second plate (52B), and wherein the channel (55) extends between the first plate (52A) and the second plate (52B).

11. The heat exchanger assembly (1) according to the preceding claim, wherein the plate assembly (52) further comprises at least one plate connector (52C) fixed between the first plate (52A) and the second plate (52B), wherein the first orifice (55A) and the second orifice (55B) are fluidly connected by said plate connector (52C).

12. The heat exchanger assembly (1) according to any of the preceding claims, wherein the first heat exchanger (10) comprises a plurality of plates (11), each of the plates (11) comprising a general plate of extension, wherein the plates (11) are stacked together in a stacking direction being perpendicular to the general plane of extension, wherein the plates (11) are configured to provide passages (11A) for a first fluid, and second passages (11B) for a second fluid,
wherein the first heat exchanger (10) further comprises a first fluid inlet manifold (12A) and a first fluid outlet manifold (12B), wherein the first manifolds (12A, 12B) are formed in the plates (11), wherein the first fluid manifolds (12A, 12B) are configured to provide a fluidal communication between the first passages (11A),
and wherein the first heat exchanger (10) further comprises a second fluid inlet manifold (13A) and a second fluid outlet manifold (13B), wherein the second manifolds (13A, 13B) are formed in the plates (11), wherein the second fluid manifolds (13A, 13B) are configured to provide a fluidal communication between the second passages (11B).

13. The heat exchanger assembly (1) according to any of the preceding claims, wherein the second heat exchanger (20) comprises a plurality of plates (21), each of the plates (21) comprising a general plate of extension, wherein the plates (21) are stacked together in a stacking direction being perpendicular to the general plane of extension, wherein the plates (21) are configured to provide passages (21A) for a first fluid, and third passages (21B) for a third fluid, wherein the second heat exchanger (20) further comprises a first fluid inlet manifold (22A) and a first fluid outlet manifold (22B), wherein the second manifolds (22A, 22B) are formed in the plates (21), wherein the first fluid manifolds (22A, 22B) are configured to provide a fluidal communication between the first passages (21A), and wherein the second heat exchanger (20) further comprises a third fluid inlet manifold (23A) and a third fluid outlet manifold (23B), wherein the third manifolds (23A, 23B) are formed in the plates (11), wherein the third fluid manifolds (23A, 23B) are configured to provide a fluidal communication between the third passages (21B).

14. The heat exchanger assembly (1) according to claims 12 and 13, wherein the first fluid outlet manifold (12B) of the first heat exchanger (10) is fluidly connected with the first fluid inlet manifold (22A) of the second heat exchanger (20) via the intermediate component (50), so that the intermediate component (50) is arranged downstream the first heat exchanger (10) and the second heat exchanger (20) is arranged downstream the intermediate component (50).

15. The heat exchanger assembly (1) according to any of the preceding claims, wherein the first heat exchanger (10) is a chiller and the second heat exchanger (20) is an internal heat exchanger.
